# EUROPEAN PATENT APPLICATION

(11) **EP 1 630 479 A2**
(43) Date of publication of application: **01.03.2006**
(21) Application number: 05076983.5
(22) Date of filing: 30.08.2005
(51) Int. Cl.: F24D 3/12, F24D 3/14

(54) **System for heating or cooling a space**

(30) Priority: 30.08.2004 NL 1026924
(71) Applicant: J.K. Beheer B.V., 6716 BR Ede (NL)
(72) Inventor: Janssen, Hendrik Johannes, 6718 TL Ede (NL)
(74) Representative: Hylarides, Paul Jacques

(57) **Abstract**

The present invention provides a system for heating or cooling a space, comprising:
- a central heating unit (CH) for supplying cold or heated fluid;
- a thermally insulating panel in which a number of channels are arranged, wherein the panel can be arranged on a wall, a floor and/or the ceiling of the space;
- fluid conduits which are to be arranged in the channels of the panel and which can be connected to the central heating unit for transporting a relatively hot or cool fluid along the conduits in order to respectively heat or cool the space;
wherein the insulating panel is a self-supporting sandwich construction, which is constructed from a plastic core having a strengthening layer on either side and the channels are arranged in at least one of the strengthening layers and the plastic core.

## Description

The present invention relates to a system and method for heating or cooling a space.

It is known to make use of floor heating to heat a space, for instance a room in a house or a business premises. Compared to the more usual radiator heating, floor heating has the advantage of a lower energy consumption and a better quality of the inside air. In addition, floor heating has a positive effect on the thermal comfort experienced by a person in the space. The comfort experienced by the person is after all determined not only by the air temperature inside the space, but also by the amount of radiant heat generated by the different structural parts such as floor, walls, ceiling. By heating a large surface in the space, for instance the floor, and thus increasing the temperature of the structural part, the amount of radiant heat generated can be increased. This means that a good thermal comfort is achieved without the air temperature in the space here having to be unnecessarily high.

Despite the use of floor heating, it can occur in some situations that the comfort in the space experienced by the person is reduced as a result of excessively high airspeeds or speed fluctuations, too high a vertical temperature gradient and/or too high or too low a contact temperature of the floor. Said effects often occur as a result of the "down-draught" close to relatively cold wall surfaces such as windows. In order to obviate this problem it is known to place the pipes of the floor heating closer together, i.e. at a smaller intermediate distance. This however only provides a partial solution. When the intermediate distance is too small the temperature of the floor can reach values above the maximum acceptable floor temperature of 35 degrees Celsius. This maximum acceptable floor temperature moreover applies only for edge zones extending a maximum of several decimeters from the wall. The thermal effect of the additional floor heating capacity in these edge zones is therefore limited. Another solution for overcoming this problem is to place one or more radiators close to the said cold wall surfaces. When the cold wall surface is a window, the radiators are generally positioned under this window.

It can also be deemed known to apply so-called wall heating instead of floor heating. Wall heating works in principle in the same manner as floor heating and is therefore also a low temperature system (LTV system). This means that operation takes place at relatively low temperatures. Although wall heating is little used as a result of the far-reaching consequences thereof for the building process, there is sometimes wall heating in bathrooms in view of the higher demands in respect of comfort in this type of space. Large parts of the walls in bathrooms are generally provided with wall heating. Because a large area of the bathroom normally consists of tiles, the wall would otherwise feel cold and the comfort experienced by the person would therefore decrease.

For implementation of wall heating there are systems known in which pre-cut plaster blocks are glued against the wall. Heating pipes are placed in the channelled recesses in the blocks. These are however heavy and relatively thick blocks with a relatively low thermal insulating value. This means that a relatively large amount of heat is lost via the wall. Furthermore, these blocks often take up quite a large amount of space, so that the volume of the room becomes noticeably smaller. A further drawback is that the system is relatively slow, since the entire mass of wall blocks and blocks placed in front of walls must be heated to give the person a sensation of comfort. A further drawback is that, when the entire mass of the wall and the lining blocks has warmed up, it will continue to generate heat for a longer period of time, whereby there is a risk of the temperature in the space becoming undesirably high.

Systems are further known wherein the heating pipes are fixed to the wall itself using brackets. Such a system has drawbacks similar to those stated above, and has the additional drawback that a thick plaster layer must be arranged on the heating pipes, often in multiple layers, in order to cover over the system.

Systems are further known wherein relatively limp plates provided with channels are fixed against the wall, wherein heating pipes are guided along the channels. Such plates cannot however be finished without any problem, for instance using tiles or for instance textured plaster. These plates moreover lack the structural rigidity to be applied as self-supporting structural element, or even to hold the heating pipes in place without further fixing elements.

Further known from the German document DE 196 25 050 A1 is a wall heating element consisting of a core of insulating material, on either side of which are arranged plates. Channels are cut locally in the plates and the insulating material, in which channels heating tubes can be placed. The whole is finished by applying to the plate a layer of adhesive, optionally with a glass fibre fabric, to which is attached a finish. The known plates cannot therefore be finished directly, i.e. without an intermediate adhesive layer. An additional operation is required, which increases the cost of arranging the wall heating elements in a space. The known plates are moreover given a strongly heat-conducting form and the heating tubes make direct contact with at least one of the plates so as to transfer heat to the relevant plate. In many cases this causes high surface temperatures.

It is an object of the present invention to provide a method and a system for increasing the comfort of a person in a space, wherein the system can be mounted rapidly and easily.

It is a further object of the present invention to provide a system which can be tiled directly or can be provided with a finishing layer, for instance a plaster layer.

According to a first aspect of the invention, this object is achieved in a system for heating or cooling a space, comprising:
- a self-supporting sandwich panel which is constructed from a plastic core having on either side a strengthening layer comprising a reinforced adhesive layer, wherein channels are arranged in at least one of the strengthening layers and the plastic core, and wherein the panel can be arranged on a wall, a floor and/or the ceiling of the space;
- fluid conduits which are to be arranged in the channels of the panel and which can be connected to a central heating unit for transporting a relatively hot or cool fluid along the conduits in order to respectively heat or cool the space. Because the panel is provided on either side with a strengthening layer, it can be readily fixed to the ground surface, such as a floor, a wall or the ceiling of the space, and direct finishing of the panel is also possible. The reinforced adhesive layer ensures that the sandwich panel acquires a high measure of rigidity. This enables a rapid and efficient implementation of the heating system. The system can furthermore be readily applied in existing building situations.

According to a preferred embodiment, the adhesive layer is a layer of mortar, wherein in a further preferred embodiment the reinforcement comprises a glass fabric. Such a layer of mortar is quite rigid, but can still be worked properly. The channels can for instance be arranged in situ simply by being cut into the panels.

According to a further preferred embodiment, the sandwich panel is manufactured from thermally insulating materials. The fluid conduits can herein be arranged clear of the strengthening layer in the sandwich panel. In other words, no contact is necessary between the fluid conduits and the strengthening layer.

The fluid conduits are preferably manufactured from flexible plastic so that they can be supplied on a roll and placed on site in the usually curved channels.

According to a preferred embodiment, the system comprises second fluid conduits to be arranged in elongate recesses in the floor of the space and connectable to the central heating system (CH), along which conduits a hot or cold fluid can be transported in order to heat or cool the floor of the space, wherein the first fluid conduits of the panel and the second fluid conduits are connected in series to each other. The systems arranged in the floor and in the panel can herein be connected to each other, so that assembly can take place in rapid and efficient manner. Since the maximum acceptable fluid temperature in the fluid conduits in a panel is higher than the maximum permissible temperature in the floor (when the conduits are arranged in a concrete covering floor), the fluid conduits are preferably connected to the central heating system such that the fluid flows first through the first fluid conduits and then through the second fluid conduits.

According to another preferred embodiment, the system comprises second fluid conduits to be arranged in elongate recesses in the floor of the space and connectable to the central heating system (CH), along which conduits a hot or cold fluid can be transported in order to heat or cool the floor of the space, and a distributor which can be connected to the central heating system (CH) for distributing the incoming fluid over the first fluid conduits in the panel and the second fluid conduits in the floor. The distributor now ensures a correct distribution (quantity and temperature of the fluid) of the cold or hot water supplied from the central heating unit over the system arranged in the floor and the system arranged in the panel.

When the temperature of the central heating system is low, no distributor is required and the first fluid conduits in the panel can be connected directly to the central heating system on both the supply side and the discharge side, optionally with a limiting unit for limiting the maximum temperature of the fluid.

It is noted that a fluid (liquid or gas, preferably water) can be carried at a suitable temperature through the fluid conduits not only to heat the space, but optionally to also cool it. This means that a comfortable temperature inside the space remains ensured during the different seasons. Since use is moreover made of a sandwich panel which is provided on either side with a relatively strong finish (adhesive layer with reinforcing mesh), it is ensured that the finishing of the panel can take place directly, i.e. without arranging additional provisions such as skim layers and so on. The sandwich panel herein preferably has a great rigidity such that, once the fluid conduits have been placed in the channels, they will remain fixed in the channels without problem.

The core is preferably manufactured from rigid foam such as polystyrene or polystyrole, which is preferably reinforced on either side with a glass fibre fabric with adhesive layer. This provides a rigid, hardly compressible construction which can moreover withstand a damp environment.

The advantage of an adhesive layer is that a finishing can now be placed directly on the panel. The glass fibre fabric furthermore ensures the strength of the layer (± 1 mm) of cement, so that it does not crack or split, whereby the adhesion to the insulating panel could break.

According to a further preferred embodiment, the system comprises a glue layer on at least one of the adhesive layers and a finishing plate on the glue layer. A random finishing plate can therefore be glued directly onto the sandwich panel, which provides architects with quite broad options for combining the system with an attractive appearance.

According to a further preferred embodiment, the insulating panel forms a self-supporting, upright panel detached from the wall of the space. In such a case the insulating panel can serve as a design or structural element, for instance as advertising, signpost, partition wall, reception desk and so on. The structural element can then simultaneously fulfill a heating or cooling function.

According to a further preferred embodiment, the panel is constructed from plate parts of three types, wherein plate parts of the first type are provided with substantially parallel channels, plate parts of the second and third type are provided with channels describing a semicircular arc and plate parts of the third type are furthermore provided with channels for feed and discharge parts of the fluid conduit. Due to this modular construction of the panels the dimensions thereof are easily modified. The total length of the panel can for instance be decreased or increased by varying the number of plate parts of the second type. Owing to the embodiment of the plate parts of the third type diverse rows of panels can be placed one above the other such that the channels formed therein form a single continuous space for placing of the fluid conduit therein.

According to another aspect of the present invention there is provided a system ceiling, comprising:
- a number of beams;
- fixing means for fixing the beams to the wall, the storey floor and/or the ceiling of the space;
- ceiling panels arranged on the beams, wherein at least some of the ceiling panels are embodied as sandwich panel, a sandwich panel comprising a plastic core having on either side a strengthening layer with reinforced adhesive layer, wherein channels are arranged in at least one of the strengthening layers and the plastic core;
- fluid conduits which are to be arranged in the channels of the sandwich panel and which can be connected to a central heating unit for transporting a relatively hot or cold fluid along the conduits in order to respectively heat or cool the space. The heating or cooling can therefore take place in the lowered ceiling, so that no major structural modifications need be carried out. The ceiling system is herein embodied such that use can be made of beams available as standard or, in some cases, already present, and fixing means of a standard lowered system ceiling. The existing ceiling panels then only have to be replaced by the panels according to the invention, whereafter, using special coupling pieces, the fluid conduits of adjacent sandwich panels are placed into mutual communication in order to realize the heating and/or cooling.

The invention also relates to the thermally insulating panel which forms a self-supporting sandwich panel and which is constructed from a thermally insulating plastic core having a strengthening layer on either side and which is provided with a number of channels in which fluid conduits are arranged.

According to another aspect of the invention, a method is provided for heating or cooling a space, comprising of:
- arranging a thermally insulating panel provided with channels against a structural part, including the floor, the wall and/or the ceiling of the space, wherein the panel is a sandwich panel constructed from a thermally insulating plastic core and a thermally insulating strengthening layer on either side, and fluid conduits are arranged in the channels;
- directly arranging a covering, preferably in the form of tiles or a plaster layer, on the strengthening layer;
- connecting the fluid conduits to an external central heating system (CH) for the purpose of transporting cold or heated fluid through the conduits.

In some cases the method preferably comprises of placing one or more plates, provided with or to be provided with fluid conduits, under a window in the wall of the space. The above mentioned down-draught can hereby be prevented without impairing the space with extra radiators.

Further advantages, features and details of the present invention will be elucidated on the basis of the following description of several preferred embodiments hereof. Reference is made in the description to the figures, in which:
Figure 1a shows a perspective view of a space provided with a floor and wall heating system in series;
Figure 1b shows a perspective view of a space provided with a parallel floor and wall heating system;
Figure 2 shows a perspective view of a preferred embodiment of a wall heating system in the space according to figure 1;
Figure 3 is a perspective view of the embodiment of the thermally insulating panel of figure 2 without the heating pipes;
Figure 4 shows a more detailed perspective view of the construction of the thermally insulating panel;
Figure 5 is a partly cut-away perspective view of a space in which an embodiment of the system according to the invention is arranged;
Figure 6 shows a partly cut-away perspective view of a detail of the wall heating system of figure 5;
Figure 7 shows a partly exploded, perspective view of a further preferred embodiment of the invention in which the system forms a number of structurally autonomous structural elements;
Figure 8 is a perspective view of a preferred embodiment of a system ceiling according to the invention;
Figure 9 shows the underside (visual side) of a preferred embodiment of a ceiling panel according to the invention; and
Figure 10 shows the top side (directed toward the storey floor or the roof of the space) of the preferred embodiment of figure 9.

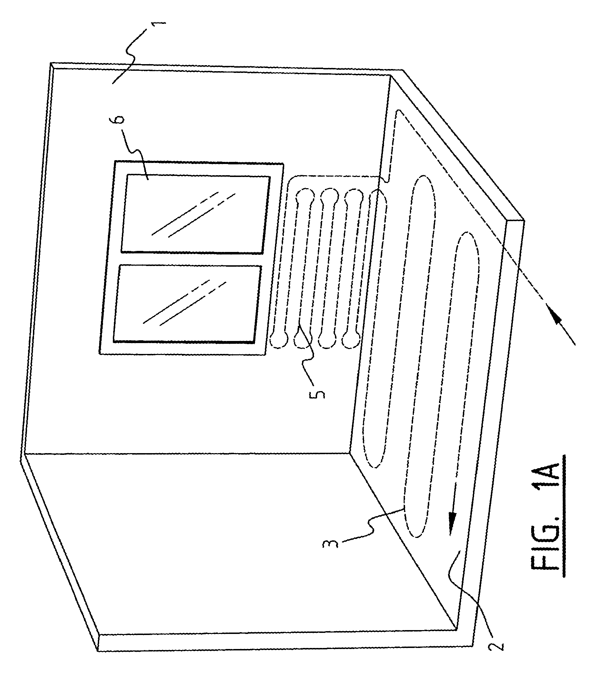

Figure 1a shows a space consisting of a number of walls 1 and a floor 2. Arranged in known manner in the floor are channels 3 in which the heating pipes of a floor heating system are placed. The floor is normally then provided with a cement screed. In one of the walls is provided a window 6, on the underside of which is arranged wall heating (shown schematically). The wall heating comprises a thermally insulating panel 7 which is fixed against wall 1 in known manner, for instance by screwing the panel to the wall at a number of positions. Because panel 7 is provided with an adhesive layer it can also be fixed to the wall in simple manner by providing the adhesive layer on the rear side with a glue layer suitable for tiles and the like.

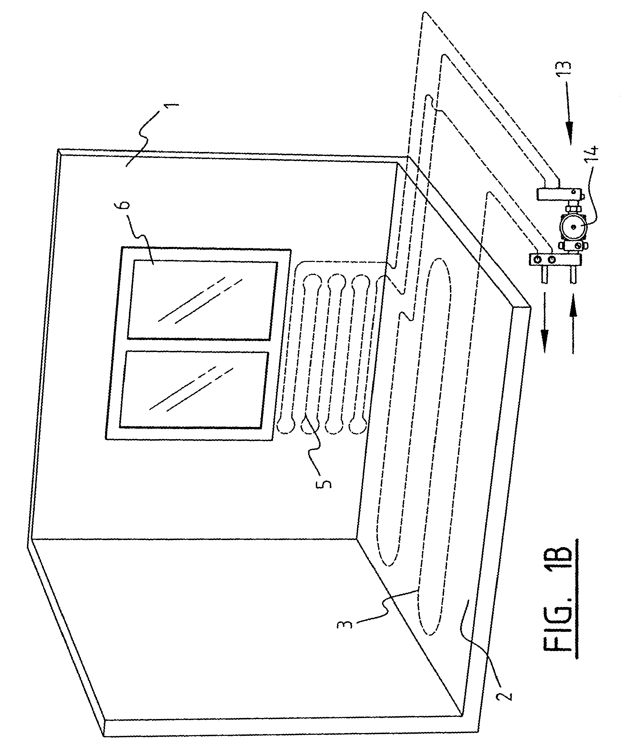

Figure 1a shows the configuration in which the hot water supplied from the central heating unit (CH) is first carried through the wall heating and only then through the floor heating. This is advantageous since the temperature in the panel may be higher than the temperature in the floor. Figure 1b shows on the other hand the situation in which the floor heating system and the wall heating system are connected to a distributor 13 so that both systems are supplied in parallel with water. Distributor 13 ensures that each of the systems is provided with water of the temperature most suitable for the system in question.

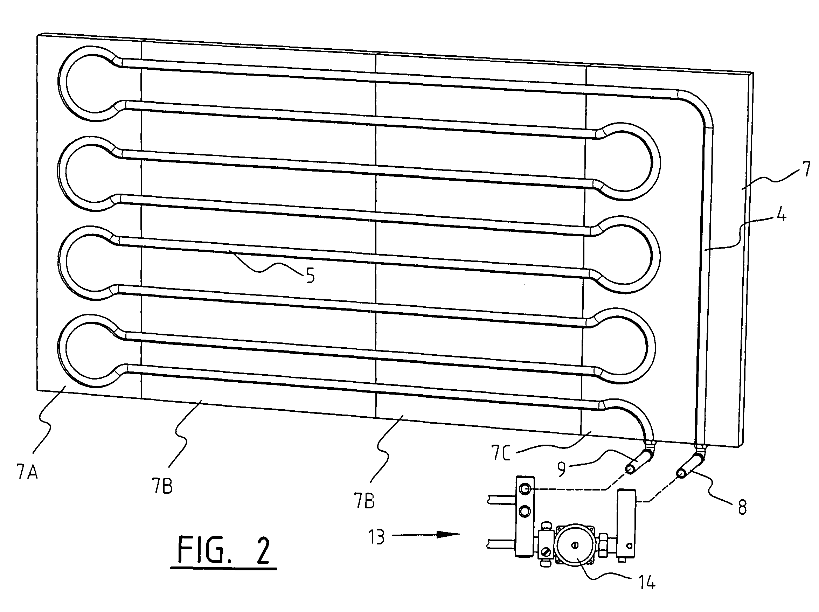

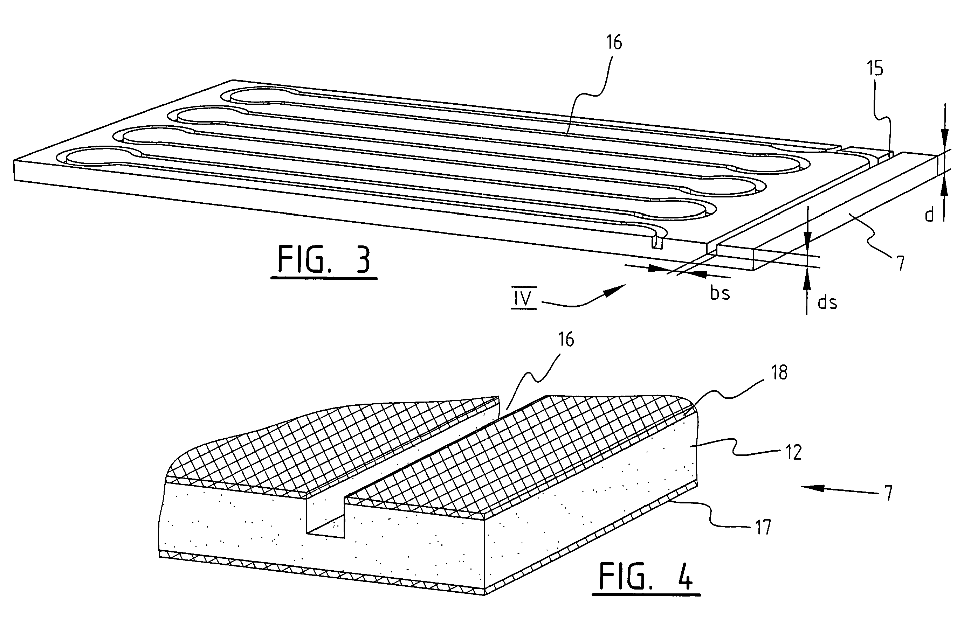

Figure 2 shows a more detailed view of a preferred embodiment of the thermally insulating panel 7 including the fluid conduits, while figure 3 shows panel 7 without the fluid conduits. It can be seen that the underside of panel 7 is provided with a connecting piece 8 to which the hot or cold water supply can be connected. The connecting piece is coupled to a feed conduit 4 which debouches in a heating or cooling pipe 5 arranged in a serpentine pattern. A relatively large heat-radiating surface area is provided by the shown pattern. Pipe 5 debouches in a connecting piece 9, to which a discharge conduit can be connected. Connecting pieces 8,9, or at least the feed and discharge conduits coupled thereto, are connected to a schematically represented distributor 13. This distributor 13 is provided with a circulation pump 14 for circulating the water through conduits 4,5.

Distributor 13 can be combined with the distributor of the floor heating so that the liquid supplied for the floor heating and the wall heating will have the same temperature. In other applications however, the floor heating and the wall heating each have a separate distributor so that the water in the floor and in the wall can have different temperatures. An advantage hereof is that greater efficiency can be obtained from the heating because specially suitable temperatures can be set for the floor and the wall.

Figure 2 shows that panel 7 is constructed from a number of different plate parts 7A,7B,7C. Provided in the middle of panel 7 are two plate parts 7B, in each of which parallel channels are arranged. The left-hand plate part 7A is provided with recesses which run in semi-arcuate form and into which the fluid conduits can be bent. The right-hand plate part 7C is likewise provided with such arcuate recesses, but also with a number of additional channels which are formed such that, when two plates 7C are placed one above the other, a continuous channel is created and the pattern shown in figure 2 can be extended upward (and downward). Owing to the shown embodiment of panel 7 with three different types of plate part the length and height hereof can be adjusted as desired using a minimum number of different standard plates.

As already noted above, the system is used not only to heat the space but also for cooling hereof. The efficiency of the cooling depends on the minimum surface temperature. For the floor this can be assumed to be a maximum cooling efficiency of about 35 Watts per m², while a much higher cooling efficiency, in the order of magnitude of about 60 Watts per m², can be achieved for the wall.

Figure 3 shows the panel of figure 2 without conduits 4,5 being arranged herein. Clearly visible are the channels 15 and 16 in which respectively feed conduit 4 and the other conduits 5 can be arranged. In practical applications the width (bs) of the channels is about 100 millimetres and the thickness (ds) thereof is about 14-16 millimetres at a total thickness d of panel 7 of roughly 20 to 100 millimetres.

Figure 4 shows the construction of panel 7 in more detail. Panel 7 consists of a core 12 of rigid foam (polystyrole or polystyrene) with a strengthened adhesive layer 17 on the one side and an identical strengthened adhesive layer 18 on the other side. The adhesive layer preferably consists of a reinforced mortar layer, the reinforcement of which is for instance realized in the form of glass fibre fabric. The embodiment of the thermal plate as sandwich panel provides, among others, the following advantages.

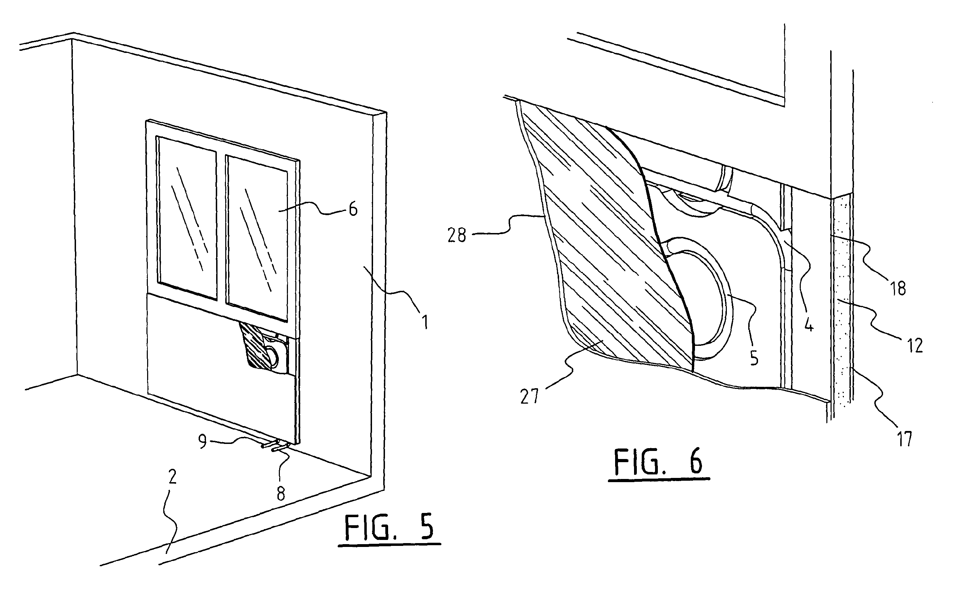

Firstly, the sandwich panel can be tiled directly. The usual skim layer or layers can after all be dispensed with since the adhesive layers provide sufficient strength for arranging the tiling directly thereon. This results in a considerable saving of the working hours for mounting the system. If for instance textured plaster or another finishing layer must be applied to the sandwich panel, this can take place in simple manner by applying thick glue to the adhesive layer. This is shown for instance in figure 5 and, in more detail, in figure 6. A glue layer 27 is applied to adhesive layer 18. This glue can be worked very rapidly, within an hour. The textured plaster or other finishing layer 28 can then be applied. In this embodiment a rapid and efficient assembly of the system is also possible. In a particularly advantageous embodiment, finishing plates, for instance in the form of HPL laminate panels, can be mounted directly against the sandwich panel so that rapid finishing of the system with such panels becomes an option.

A further advantage of the application of a sandwich panel is that it can be given a self-supporting form. This makes it possible to place the sandwich panels, optionally provided with the above mentioned finishing plates, as standalone structural elements in the space, for instance as advertising pillar or signpost, partition wall, reception desk and so on. Such structural elements can then serve simultaneously as heating element and/or cooling element. Particularly in larger spaces an adequate heating or cooling can thus be provided in the centre of the space by placing such structural elements at a distance from the walls.

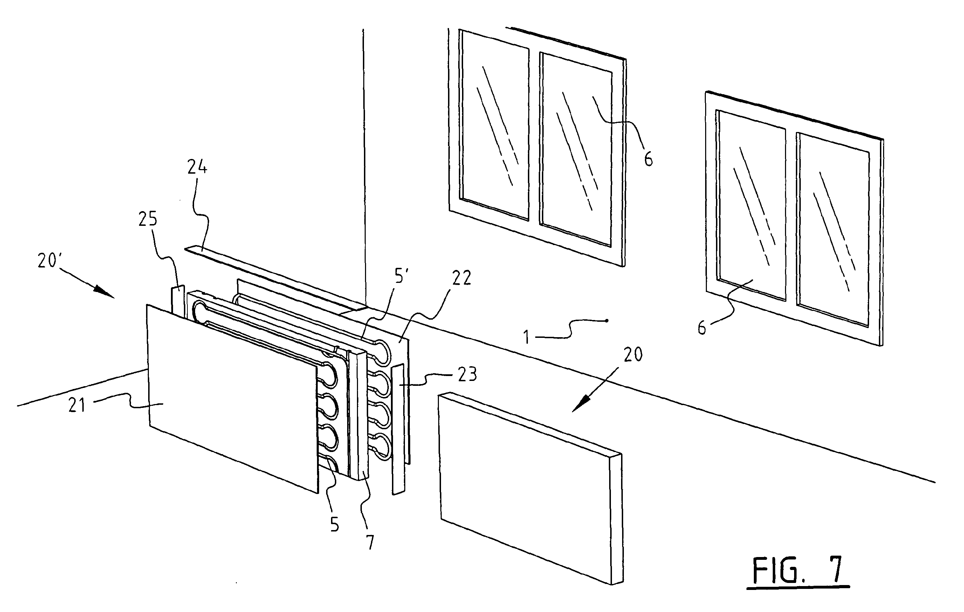

The construction of such structural elements is shown further in figure 7. Two structural elements 20,20' are shown, wherein the right-hand structural element 20 is shown in assembled state and the left-hand structural element 20' is shown in an exploded view. The sandwich panel 7 can be seen in which heating pipes 5 are arranged in known manner. In the shown embodiment sandwich panel 7 takes a thick form such that the panel is provided with channels on two sides, so that pipes 5' can also be arranged on the opposite side. This means that panel 7 now has its heating or cooling action on both sides. Arranged against panel 7 are front and rear finishing plates 21,22, an upper finishing plate 24 and two side finishing plates 23,25 so as to give the whole an attractive appearance. The finishing plates are manufactured from suitable covering material such as wood, multiplex, plastic, stone and so on.

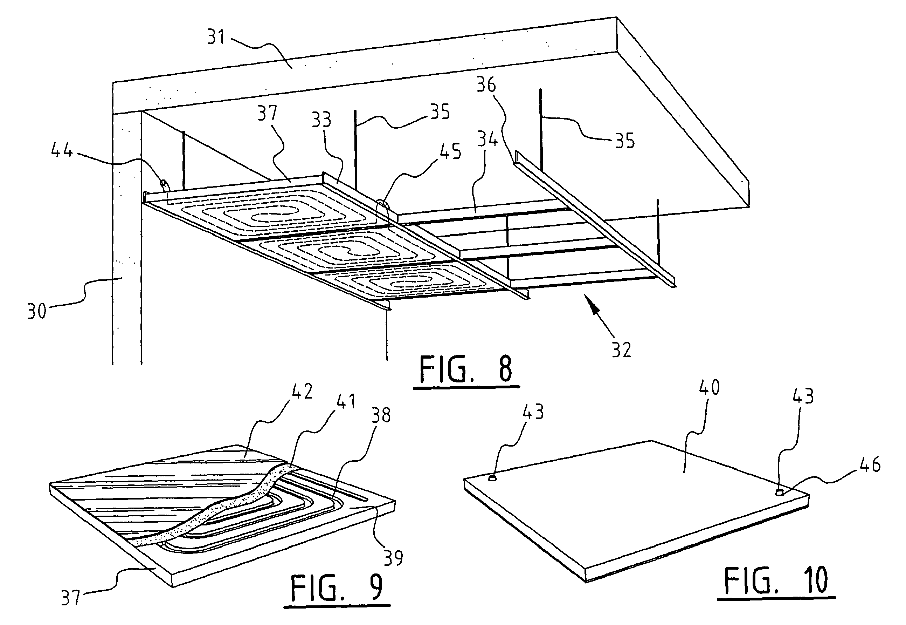

Figure 8 shows a preferred embodiment of a ceiling system according to the invention. Figure 8 shows a wall 30 and a storey floor 31, under which a system ceiling 32 is arranged. System ceiling 32 is constructed from a number of longitudinal beams 33 and cross beams 34. The longitudinal beams and/or cross beams are herein suspended from storey floor 31 using hangers 35. Ceiling panels 37 of the above described type are arranged between the longitudinal and cross beams. A partly cut-away perspective view of the visual side of such a ceiling panel is shown in figure 9, while figure 10 shows a perspective view of the opposite side 40 of this ceiling panel. As is shown clearly in figure 9, an elongate, curved channel 38 is arranged in ceiling panel 37, this on the visual side 39 thereof, for instance by means of cutting channels into the plate on site. The pattern of channels 38 is such that an inlet and an outlet point are provided close to two corners of panel 37. The inlet and outlet point for the fluid conduits to be arranged at a later stage comprise respective passages 46 to the opposite side 40 of ceiling panel 37.

Once channels 38 have been arranged, the fluid conduits (not shown) can be placed in known manner in the channels, wherein the outer ends of conduits are placed through said passages 46. Panels 37 can then be skimmed with for instance a cement-based or plaster-based mortar 41. After having for instance sanded the surface, finish 42 can consist of a type of spray mortar, plastic (by glueing) or other finish. Once panels 37 are finished they are arranged on beams 33,34 of the ceiling in known manner, for instance by being placed on the flanges 36 provided on longitudinal beams 33. When a number of ceiling panels 37 has been suspended in such a manner, the outer ends 43 of the fluid conduit protruding on the upper side 40 of the ceiling panels can be mutually connected using coupling pieces 45 (serial coupling) or connected to a central fluid conduit (parallel coupling). These coupling pieces 45 are preferably embodied such that they can be snapped fixedly onto ends 43 of the fluid conduits in simple manner, and the mutual coupling of the fluid conduits can therefore take place in rapid and efficient manner.

An advantage of the described system is that many spaces, and nearly all spaces in offices, have a system ceiling, so that it is merely a question of replacing and connecting the ceiling panels to the heating or cooling system in order to create the desired heating or cooling option. Since these are furthermore relatively large surface areas, heating can take place at relatively low temperatures and cooling can take place at relatively high temperatures. The system hereby makes great energy-saving possible.

The invention is not limited to the above described preferred embodiments thereof. The rights sought are defined by the following claims, within the scope of which many modifications can be envisaged.

## Claims

1. System for heating or cooling a space, comprising:
- a self-supporting sandwich panel which is constructed from a plastic core having on either side a strengthening layer comprising a reinforced adhesive layer, wherein channels are arranged in at least one of the strengthening layers and the plastic core, and wherein the panel can be arranged on a wall, a floor and/or the ceiling of the space;
- fluid conduits which are to be arranged in the channels of the panel and which can be connected to a central heating unit for transporting a relatively hot or cool fluid along the conduits in order to respectively heat or cool the space.

2. System as claimed in claim 1, wherein the adhesive layer is a layer of mortar.

3. System as claimed in claim 1 or 2, wherein the reinforcement comprises a glass fabric.

4. System as claimed in claim 1, wherein the sandwich panel is manufactured from thermally insulating materials.

5. System as claimed in any of the foregoing claims, wherein the fluid conduits are arranged clear of the strengthening layer in the sandwich panel.

6. System as claimed in any of the foregoing claims, wherein the core is manufactured from rigid foam such as polystyrene or polystyrole.

7. System as claimed in any of the foregoing claims, wherein the self-supporting sandwich panel forms part of a lowered system ceiling to be arranged under the storey floor or roof of the space.

8. System as claimed in claim 7, wherein the system ceiling comprises a number of sandwich panels positioned mutually adjacently, wherein the fluid conduits of different sandwich panels are connected to each other with coupling pieces on the side directed toward the storey floor or the roof.

9. System as claimed in claim 7 or 8, wherein the channels are provided on the visual side of the system ceiling.

10. System as claimed in any of the foregoing claims, comprising a glue layer on at least one of the adhesive layers and a finishing plate on the glue layer.

11. System as claimed in any of the foregoing claims, wherein the panel is constructed from plate parts of three types, wherein plate parts of the first type are provided with substantially parallel channels, plate parts of the second and third type are provided with channels describing a semicircular arc, and plate parts of the third type are furthermore provided with channels for feed and discharge parts of the fluid conduit.

12. System as claimed in any of the foregoing claims, wherein the insulating panel forms a self-supporting, upright panel detached from the wall of the space.

13. System as claimed in any of the foregoing claims, wherein the panel thickness amounts to between 20 and 100 mm, and preferably about 30 mm or a multiple thereof.

14. System as claimed in any of the foregoing claims, wherein the fluid conduits are manufactured from flexible plastic.

15. System ceiling, comprising:
- a number of beams;
- fixing means for fixing the beams to the wall, the storey floor and/or the ceiling of the space;
- ceiling panels arranged on the beams, wherein at least some of the ceiling panels are embodied as sandwich panel, preferably a sandwich panel as defined in any of the foregoing claims, a sandwich panel comprising a plastic core having on either side a strengthening layer with reinforced adhesive layer, wherein channels are arranged in at least one of the strengthening layers and the plastic core;
- fluid conduits which are to be arranged in the channels of the sandwich panel and which can be connected to a central heating unit for transporting a relatively hot or cold fluid along the conduits in order to respectively heat or cool the space.

16. System ceiling as claimed in claim 15, comprising coupling pieces for coupling fluid conduits of adjacent sandwich panels.

17. Thermally insulating, self-supporting sandwich panel, preferably the panel as defined in any of the foregoing claims, which is constructed from a thermally insulating plastic core having a strengthening layer on either side and which is provided with a number of channels in which fluid conduits are arranged.

18. Method for heating or cooling a space, comprising of:
- arranging a panel against a structural part, including the floor, the wall and/or the ceiling of the space, wherein the panel comprises a sandwich panel constructed from a thermally insulating plastic core having on either side a strengthening layer provided with a reinforced adhesive layer;
- arranging one or more channels in at least one of the strengthening layers and the core, preferably by cutting the channels therein;
- arranging a fluid conduit in the channels;
- directly arranging a covering, preferably in the form of tiles or a plaster layer, on the strengthening layer;
- connecting the fluid conduits to an external central heating system (CH) for the purpose of transporting cold or heated fluid through the conduits.

19. Method as claimed in claim 18, comprising of holding the fluid conduits clear of the strengthening layer during arranging of the fluid conduits in the channels.

20. Method as claimed in claim 18 or 19, comprising of placing one or more plates, provided with or to be provided with fluid conduits, under a window in the wall of the space in order to reduce the down-draught.

21. Method as claimed in any of the claims 18-20, comprising of arranging the sandwich panels in a lowered system ceiling and coupling the fluid conduits in the separate sandwich panels.

22. Method as claimed in any of the claims 18-21, comprising of applying a glue layer to at least one of the adhesive layers and arranging a finishing plate on the glue layer.
